# EUROPEAN PATENT SPECIFICATION

(11) **EP 3 686 227 B1**
(45) Date of publication and mention of the grant of the patent: **21.07.2021**
(21) Application number: 19215697.4
(22) Date of filing: 12.12.2019
(51) Int. Cl.: C08F 265/06, C08F 292/00, C08K 3/013, C08K 3/36, C04B 24/26

(54) **THERMOSETTING COMPOSITE MATERIAL, PARTICULARLY FOR PROVIDING SANITARY ARTICLES, BATHROOM WASHBASINS AND KITCHEN SINKS**
WÄRMEHÄRTBARES VERBUNDMATERIAL, INSBESONDERE ZUR BEREITSTELLUNG VON SANITÄRARTIKELN, BADEZIMMERWASCHBECKEN UND KÜCHENSPÜLBECKEN
MATÉRIAU COMPOSITE THERMODURCISSABLE, EN PARTICULIER POUR FOURNIR DES ARTICLES SANITAIRES, DES LAVABOS DE SALLE DE BAINS ET DES ÉVIERS DE CUISINE

(30) Priority: 28.12.2018 IT 201800021340
(43) Date of publication of application: 29.07.2020
(73) Proprietor: Elleci S.p.A., 04014 Pontinia, Z.I. Mazzocchio LT (IT)
(72) Inventor: TRAVERSA, Giancarlo, 04019 TERRACINA LT (IT); TRAVERSA, Graziano, 04019 TERRACINA LT (IT); SARACINO, Luca, 04011 APRILIA LT (IT)
(74) Representative: Modiano, Micaela Nadia

(56) References cited:
- EP-A2- 1 454 581
- IT-A1-201600 108 376
- US-B1- 9 260 344

## Description

The present invention relates to a thermosetting composite material, particularly for providing sanitary articles, for example bathroom washbasins and kitchen sinks.

Currently, as is known in the background art, sinks and washbasins are commonly made of plastic materials, particularly with thermosetting composite materials formed by a matrix (a polymeric resin) and a filler material (also termed "filler", typically mineral particles) that is distributed inside the polymeric matrix. This thermosetting mixture formed by the polymeric matrix and the filler material is injected or poured (in the melted state) in a reaction mold in which, optionally by virtue of catalysts and/or reaction initiators, molding (i.e., the polymerization reaction that leads to the formation of the desired manufactured articles) occurs. The characteristic of thermosetting materials is that they cannot be melted again after the molding step.

The thermosetting composite material described in European Patent EP 1415794 B1 is characterized in that it has a filler material that comprises a mixture of different portions of inert fillers. This filler material is distributed uniformly inside the polymeric matrix by means of a rotary mold. The material thus obtained offers great resistance to mechanical stresses; on the other hand, the ease of cleaning of the manufactured articles made of this material is not enough, which is a disadvantage in the case of products for which accurate cleaning is essential, such as sinks and washbasins.

Italian Patent IT 1349503 describes a thermosetting composite material wherein the polymeric matrix is constituted by a solution of PMMA (polymethyl methacrylate) in MMA (methyl methacrylate), and the filler material is formed by glass beads with a particle size comprised between 200 µm and 1500 µm, preferably comprised between 400 µm and 900 µm. Manufactured articles made of this material, particularly sinks, have poor water absorption, by virtue of the presence at the surface level of glass microbeads that act as impermeabilizer, low surface roughness, good resistance to thermal shocks and great ease in cleaning.

US 2008/0132607 describes a composite material comprising a hardened matrix in which an inorganic filler (comprising mainly quartz) and an acrylic binding agent are dispersed (for about 70-74% by weight). The acrylic binding agent comprises a solution of PMMA in MMA and acrylate cross-linking agents with two or more reactive sites (for example TMPTMA, trimethylolpropane trimethacrylate) and is characterized in that the percentage of cross-linking agent is comprised between 10% and 50% by weight with respect to the total weight of the binding agents. Manufactured articles having a scratch-resistant surface, good ease in cleaning, good hydrophobicity and high surface compactness are provided with this material.

US Patent 5,800,910 and EP 0753017 B1 describe a composite material is described comprising a hardened acrylic matrix in which a filler mix of one or more inorganic substances such as quartz, cristobalite, tridymite, glass, enamel frits, aluminum oxide, aluminum trihydrate, kaolin, magnesium silicate, granite, zirconium oxide, corundum beads, ceramic beads and an acrylic binding agent, constituted mainly by one or more substances selected from MMA, PMMA, EMA (ethyl methacrylate), BMA (butyl methacrylate), EA (ethyl acrylate), BA (butyl acrylate), EHA (ethylhexyl acrylate), E2BADMA (ethoxylated bisphenol A dimethacrylate), EGDMA (ethylene glycol dimethacrylate), TMPTMA (Trimethylolpropane trimethacrylate), are dispersed (for about 70-75% by weight). IT 2016 0010 8376 A1 discloses a thermosetting composite material, comprising a polymeric matrix and an inorganic filler material distributed within said matrix, US 9 260 344 B1 and EP 1 454 581 A2 disclose quartz containing syrups that are also used to provide molded products having stone-like surfaces and discloses the syrups.

Based on what has been described so far, it is observed that over time it has been possible to provide composite materials that allow to provide products having better characteristics from the point of view of ease and efficiency in cleaning and with greater hydrophobicity; on the other hand, the improvement of these characteristics has compromised other equally important technical characteristics, such as resistance to shocks and violent impacts, resistance to temperature variations, scratch resistance, all very important characteristics for manufactured articles such as kitchen sinks and bathroom washbasins.

The aim of the present invention, as defined by the appended claims, is to provide a new composite material that overcomes the limitations and the drawbacks of the background art and is particularly suitable for providing manufactured articles for the sanitary field.

Within this aim, an object of the invention is to provide a composite material that allows to provide manufactured articles that can be cleaned easily and efficiently, have a reduced tendency to stain and have high hydrophobicity characteristics. At the same time, an object of the invention is to provide a composite material that allows to provide manufactured articles with high characteristics of mechanical strength, particularly resistance to impacts, to both deep and superficial abrasion (scratching) and to temperature variations.

Another object of the present invention is to provide a composite material that allows to provide manufactured articles having an optimum aesthetic result.

Another object of the invention is to provide a composite material that is particularly suitable to provide kitchen sinks and bathroom washbasins.

Another object of the invention is to provide a composite material that is highly reliable and safe in use, the provision of which is relatively easy and at competitive costs.

This aim and these and other objects that will become better apparent hereinafter are achieved by a thermosetting composite material, as defined by the appended claims, comprising a polymeric matrix and an inorganic filler material distributed within said matrix, characterized in that the polymeric matrix is a reaction soup which comprises (i) a mixture constituted by isobornyl methacrylate (IBOMA) and cyclohexyl methacrylate (CHMA) in a percentage comprised between 5% and 80% by weight on the weight of the soup; (ii) 2-hydroxyethyl methacrylate (HEMA) in a percentage comprised between 5% and 15% by weight on the weight of the soup; (iii) one or more cross-linking agents in a percentage comprised between 0.001% and 4% by weight on the weight of the soup; and (iv) a solution of polymethyl methacrylate in methyl methacrylate, in a percentage which is the completion to 100% by weight on the weight of the soup.

This aim and these objects are also achieved by the use of the thermosetting composite material according to the invention for providing manufactured articles by molding. Finally, the above aim and objects are achieved by a manufactured article provided by molding, comprising the thermosetting composite material according to the invention, wherein said manufactured article is selected from the group constituted by: a bathroom washbasin, a kitchen sink and another sanitary article.

Further characteristics and advantages of the invention will become better apparent from the detailed description that follows.

It is known in the background art that polymeric matrices comprising isobornyl methacrylate (IBOMA) in percentages not higher than 5% by weight lead to manufactured articles that can be cleaned more effectively and more easily. The same effect is obtained by using other so-called "special" methacrylates, i.e., which are esterified with groups other than methyl; by virtue of these groups, in fact, the chemical-physical characteristics of the final product are modified. It is also known, however, that a percentage of special methacrylates above 5% by weight leads to unwanted results, which vary according to the dimensions of the particles of the filler material used together with the polymeric matrix. In particular, percentages above 5% by weight of IBOMA together with filler material of large dimensions (particle size greater than 600 µm) in the composite material cause an increase in the fragility of the final manufactured article, due to the high glass transition temperature of IBOMA and to the degree of cross-linking. Percentages above 5% by weight of IBOMA together with filler material of small dimensions in the composite material instead lead to final manufactured articles that are less fragile but have an excess of resin on their surface, which is also distribute unevenly. Any addition of cross-linking agent, which improves the shrinkage and the surface yield of the product, increases the fragility of the manufactured article.

The composite material according to the invention comprises, within the reaction soup that constitutes the polymeric matrix, three special methacrylates: the already mentioned isobornyl methacrylate (IBOMA), cyclohexyl methacrylate (CHMA) and 2-hydroxyethyl methacrylate (HEMA). IBOMA, CHMA and HEMA have very different chemical-physical characteristics (specific gravity, alkalinity, volume, glass transition temperature, cross-linking ability). In particular, among the characteristics of IBOMA there are high glass transition temperature, low degree of shrinkage and high mechanical strength. The IBOMA/CHMA mixture combines the high glass transition temperature with easier cleaning. HEMA instead has a high reactivity, which allows to modify the chemical-physical characteristics of the materials in which is incorporated.

The inventors have found surprisingly that the composite material according to the invention, the polymeric matrix of which is constituted by a reaction soup that comprises a mixture of IBOMA and CHMA in percentages comprised between 5% and 80% by weight and HEMA in percentages comprised between 5 and 15% by weight, produces manufactured articles with improved mechanical and strength properties. HEMA in fact increases the elasticity of the final manufactured article, thus making it less fragile and resistant to surface abrasions as well. The three acrylic monomers mix and distribute uniformly inside the reaction soup, contributing to the forming of a composite material with improved technical properties with respect to known materials. In particular, while the glass transition temperatures of HEMA, MMA, IBOMA and CHMA are, respectively, 55°C, 105°C, 150°C and 110°C, the glass transition temperature of the resulting polymeric matrix is comprised between 110°C and 135°C, a characteristic on which the high resistance to thermal shocks and to the hot pot test depend. The surface of the manufactured articles provided by means of the composite material according to the invention are rich in a copolymer composed of IBOMA and CHMA, which gives the characteristics of greater resistance to staining agents, by virtue of the presence of CHMA, while maintaining elasticity by virtue of the presence of HEMA.

When the proportion of IBOMA/CHMA exceeds 10% by weight on the total weight of the reaction soup, one obtains molded bodies that have good scratch resistance and easy cleaning but are very fragile. The inventors have found surprisingly that adding 5% to 15% HEMA by weight on the total weight of the reaction soup allows to maintain the properties given by the combination of IBOMA and CHMA while increasing the elasticity and the wear resistance of the molded body.

In a preferred embodiment, the reaction soup can comprise the mixture constituted by IBOMA and CHMA in a percentage comprised between 10% and 80% by weight on the total weight of the soup.

In a more preferred embodiment, the reaction soup can comprise the mixture constituted by IBOMA and CHMA in a percentage comprised between 30% and 80% by weight on the total weight of the soup.

In a particularly preferred embodiment, said mixture constituted by IBOMA and CHMA is a mixture of IBOMA and CHMA in equal parts.

In another preferred embodiment, the reaction soup can comprise HEMA in a percentage comprised between 7% and 12% by weight on the total weight of the soup.

It has been mentioned that the reaction soup that constitutes the polymeric matrix comprises one or more cross-linking agents; preferably, said cross-linking agents can be selected from the group constituted by ethylene glycol dimethylacrylate (EGDMA), 1,6-hexanediol dimethacrylate and triethyleneglycol dimethylacrylate (TRGDMA). It is also possible to use other cross-linking agents known to the person skilled in the art that have two active sites.

The percentage of said one or more cross-linking agents is globally comprised between 0.001% and 5% by weight on the weight of the soup that constitutes the polymeric matrix; preferably, the percentage of cross-linking agents can be globally comprised between 1% and 3%, and more preferably between 1% and 2%, by weight on the weight of the soup that constitutes the polymeric matrix.

The reduced percentage content of cross-linking agents in the reaction soup is a particularity with respect to what is known in the background art, in which reaction soups are described which contain cross-linking agents in percentages higher than 10% by weight, in order to improve the surface compactness of the final manufactured articles.

In a preferred embodiment, therefore, the invention relates to a thermosetting composite material in which the reaction soup comprises (i) a mixture constituted by isobornyl methacrylate (IBOMA) and cyclohexyl methacrylate (CHMA) in a percentage comprised between 30% and 80% by weight on the weight of the soup; (ii) 2-hydroxyethyl methacrylate (HEMA) in a percentage comprised between 7% and 12% by weight on the weight of the soup; (iii) one or more cross-linking agents in a percentage comprised between 1% and 2% by weight on the weight of the soup; and (iv) a solution of polymethyl methacrylate in methyl methacrylate, in a percentage which is the completion to 100% by weight on the weight of the soup.

The physical and mechanical properties (from which the possibilities of use depend directly) of the manufactured articles made of the composite material according to the invention depend also on the characteristics of the filler material, particularly on its dimensions.

The background art describes the use of fillers with dimensions lower than 0.05 mm as fine filler material for multiple applications: the use of fillers of this type creates a surface of the final manufactured article that is particularly smooth and easy to clean but has the disadvantage of being poorly resistant to scratches and to the hot pot test. The use of fillers of coarser dimensions, vice versa, offers greater resistance of the final manufactured article to mechanical and thermal stresses, as can be proved with the UNI 13310 "thermal shock" test: however, even with such fillers, under the action of hot-cold water roughened areas might be created in the bottom of the sink. Moreover, the ease of cleaning of manufactured articles that comprise these fillers is generally lower than that of manufactured articles made of composite materials comprising fine fillers.

The inventors have now found that it is possible to obtain a better result regarding all of the cited characteristics with an appropriate combination of fine and coarse fillers of specific type and particle size, as described hereinafter.

The inorganic filler material used in the composite material according to the present invention is thus constituted by one or more fillers selected from the group constituted by crystalline fillers and amorphous fillers.

The crystalline fillers can be preferably selected from the group constituted by: micronized quartz, glass beads and ceramic microparticles. In one embodiment, the micronized quartz can have dimensions comprised between 50 µm and 250 µm, preferably comprised between 60 µm and 220 µm, and more preferably comprised between 63 µm and 212 µm. In another embodiment, the glass beads can have dimensions comprised between 50 µm and 250 µm, preferably comprised between 60 µm and 220 µm and more preferably comprised between 63 µm and 212 µm. In anther embodiment, the ceramic microparticles can have average dimensions comprised between 0.05 µm and 5 µm: by virtue of the extremely reduced dimensions, the ceramic microparticles are capable of occluding every microporosity at the level of the composite material, increasing its compactness.

The amorphous fillers can be selected preferably from the group constituted by: fused silica, corundum, silicon carbide, aluminum trihydrate (ATH), wallastonite and micronized glass fiber.

In a preferred embodiment, at least one amorphous filler selected from fused silica, corundum, silicon carbide can be used; these materials, by having a low coefficient of linear expansion, allow to increase the resistance of the final manufactured articles to temperature changes (thermal shock). The fused silica, corundum and silicon carbide can have a particle size cross-section preferably comprised between 100 µm and 800 µm, more preferably comprised between 100 µm and 300 µm, even more preferably comprised between 63 µm and 200 µm: it has in fact been found that these particle sizes, considerably smaller than those used in the background art for fillers, considerably improve the mechanical strength of the final manufactured article, particularly resistance to surface abrasion (scratching).

In another preferred embodiment, at least one amorphous filler selected from micronized glass fiber and wallastonite can be used. The expression micronized glass fiber is understood to mean glass fiber the particle size cross-section of which is comprised between 1.5 µm and 20 µm. The wallastonite also can have a particle size cross-section preferably comprised between 1.5 µm and 20 µm. Tests performed on the wallastonite and described in patent EP 1415794 B1 have confirmed that micronized glass fiber has a similar and even greater effect.

The amorphous fillers can be used in a percentage globally comprised between 1% and 20%, preferably between 2% and 15% by weight with respect to the total weight of the filler material. Among the amorphous fillers, it is also preferable that micronized glass fiber and/or wallastonite are used in a percentage globally comprised between 1% and 5%, more preferably between 1% and 3% by weight with respect to the total weight of said filler material.

In order to improve whiteness intensity, the filler material can comprise ATH in a percentage between 10% and 65%, preferably 20% to 60% with respect to the total weight of the thermosetting composite material.

The presence of ATH, a material with flame retardant properties, in these proportions also gives the thermosetting composite material self-extinguishing properties.

Preferably, the filler material can be constituted by one or more crystalline fillers and one or more amorphous fillers: the simultaneous presence of crystalline fillers and amorphous fillers increases the resistance of the manufactured article to deep abrasions. More preferably, the filler material can be constituted by one or more crystalline fillers selected from the group constituted by micronized quartz, ceramic microparticles and glass beads and by one or more amorphous fillers selected from the group constituted by fused silica, corundum, silicon carbide, aluminum trihydrate (ATH), wallastonite and micronized glass fiber.

The combination of crystalline and amorphous fillers in the filler material allows to increase the resistance to deep abrasions and to improve the unit cost of the composite material.

In another preferred embodiment of the invention, the fillers can be silanized: it has been observed in fact that silanized fillers further increase the mechanical strength properties of the final manufactured article. In order to obtain the above fillers in silanized form it is possible to add to the mixture one or more binding agents rich in silane groups, such as for example the product available on the market with the trade name BYK®-C 8000.

The total percentage of the filler material can be preferably comprised between 50% and 90% by weight with respect to the total weight of the composite material, more preferably comprised between 65% and 80% and even more preferably comprised between 65% and 75%.

It is also preferable that in the mixture there are also one or more agents that modify the viscosity and thixotropy of the resulting material, such as for example those available commercially with the trade names BYK®-410 or BYK®-W 980; these agents optimize the dispersion of the fillers inside the resulting material.

It should be noted that by using the polymeric matrix constituted by the reaction soup as described above, the particle size of the filler material can be chosen exclusively on the basis of the aesthetic effect that one wishes to obtain, without being tied to the need to use a particular particle size distribution in order to be able to obtain the necessary mechanical performance. For example, 80% by weight of the filler (on the total of the filler used) can have an average particle size of 60 µm without any negative repercussion occurring on the mechanical characteristics of the resulting manufactured articles.

Another aspect of the present invention relates to the use of the thermosetting composite material described herein to provide manufactured articles such as, for example, sanitary articles, particularly bathroom washbasins and kitchen sinks. The provision of such manufactured articles occurs by means of known composite material molding methods commonly used in the background art. In a preferred embodiment, the manufactured articles can be provided by means of a pouring-injection molding. Preferably, the manufactured articles can be provided by means of the molding technology described in European patent EP 1415794 B1, in the name of the same Applicant as the present application.

Another aspect of the present invention relates therefore to a manufactured article made of the thermosetting composite material described herein. Preferably, said manufactured article can be a sanitary article, particularly a bathroom washbasin or a kitchen sink. Said manufactured article can be provided by molding, preferably by pouring-injection molding.

In practice it has been found that the thermosetting composite material according to the present invention fully achieves the intended aim, since it allows to provide manufactured articles, particularly sanitary articles, with improved mechanical strength properties.

In particular, the presence of more than 5% by weight of a mixture of IBOMA and CHMA in the polymeric matrix of the composite material makes the final manufactured articles made of said material even more easy and effective to clean, while the presence of HEMA, which increases the elasticity of the material, allows to overcome the problems of fragility of the manufactured articles found in the background art.

The manufactured articles made of the composite material described herein have characteristics of high mechanical strength, particularly resistance to scratches and deep abrasions and resistance to thermal shocks. Moreover, the surface of the manufactured articles has a reduced porosity and a uniform distribution of hydrophobic and oleophobic polymers, characteristics that make it waterproof and consequently resistant to stains and easy to clean. Also, the aesthetic result of said manufactured articles is excellent, by virtue of the low surface roughness. Furthermore, the composite can be molded on different mold finishes, from the most matt to the most glossy (3°/110° glossy at 85°), remaining easy to clean, fast to produce and with an excellent aesthetic result.

### EXAMPLES:

Some examples of formulation of the reaction soup that constitutes the polymeric matrix of the composite material of the invention are given hereinafter. Percentages are expressed by weight with respect to the total weight of the reaction soup.

### Formulations according to the invention:

| **REACTION SOUPS** | | | |
|---|---|---|---|
| | **Formula 1** | **Formula 2** | **Formula 3** |
| **MMA** | 13.30% | 24.70% | 36.00% |
| **CHMA** | 29.00% | 22.00% | 15.00% |
| **IBOMA** | 29.00% | 22.00% | 15.00% |
| **PMMA** | 20.30% | 20.30% | 20.30% |
| **EGDMA** | 1.40% | 2.00% | 1.70% |
| **STEARATE (release agent)** | 2.00% | 2.00% | 2.00% |
| **HEMA** | 5.00% | 7.00% | 10.00% |
| **TOTAL** | 100.00% | 100.00% | 100.00% |
| | | | |

| **FILLER** | | | |
|---|---|---|---|
| | **Filler 1** | **Filler 2** | **Filler 3** |
| **QUARTZ** | 75.60% | 6.35% | 0.00% |
| **CRISTOBALITE** | 4.00% | 5.00% | 5.00% |
| **MICRONIZED CRISTOBALITE** | 5.60% | 70.00% | 25.00% |
| **GLASS BEAD** | 4.80% | 1.60% | 0.00% |
| **ATH** | 0.00% | 10.00% | 70.00% |
| **CERAMIC FILLER** | 10.00% | 7.05% | 0.00% |
| **TOTAL** | 100.00% | 100.00% | 100.00% |
| | | | |

| **COMPOUND** | | | |
|---|---|---|---|
| | **Compound 1** | **Compound 2** | **Compound 3** |
| **SOUP (1/2/3)** | 22.45% | 24.37% | 22.80% |
| **MICRONIZED GLASS FIBER** | 1.60% | 5.80% | 3.15% |
| **BYK 410 (thixotropic agent)** | 0.70% | 0.90% | 0.15% |
| **BYK 8000 (coupling agent)** | 2.60% | 0.70% | 0.60% |
| **PERKADOX 16 (catalyst 1)** | 0.20% | 0.20% | 0.20% |
| **LAUROX (catalyst 2)** | 0.20% | 0.20% | 0.20% |
| **FILLER (1/2/3)** | 72.25% | 67.83% | 72.90% |
| **TOTAL** | 100.00% | 100.00% | 100.00% |

## Claims

1. A thermosetting composite material, comprising a polymeric matrix and an inorganic filler material distributed within said matrix, **characterized in that** the polymeric matrix is a reaction soup which comprises (i) a mixture constituted by isobornyl methacrylate (IBOMA) and cyclohexyl methacrylate (CHMA) in a percentage comprised between 5% and 80% by weight on the weight of the soup; (ii) 2-hydroxyethyl methacrylate (HEMA) in a percentage comprised between 5% and 15% by weight on the weight of the soup; (iii) one or more cross-linking agents in a percentage comprised between 0.001% and 4% by weight on the weight of the soup; and (iv) a solution of polymethyl methacrylate in methyl methacrylate, in a percentage which is the completion to 100% by weight on the weight of the soup.

2. The thermosetting composite material according to claim 1, wherein the reaction soup comprises the mixture constituted by IBOMA and CHMA in a percentage comprised between 10% and 80% by weight, preferably between 30% and 80% by weight with respect to the total weight of the soup.

3. The thermosetting composite material according to claim 1 or 2, wherein said mixture constituted by IBOMA and CHMA is a mixture of IBOMA and CHMA in equal parts.

4. The thermosetting composite material according to any one of the preceding claims, wherein the reaction soup comprises HEMA in a percentage comprised between 7% and 12% by weight with respect to the total weight of the soup.

5. The thermosetting composite material according to any one of the preceding claims, wherein the reaction soup comprises one or more cross-linking agents in a percentage comprised between 0.5% and 3% by weight with respect to the total weight of the soup.

6. The thermosetting composite material according to any one of the preceding claims, wherein said cross-linking agents are selected from the group constituted by ethylene glycol dimethylacrylate (EGDMA), 1,6-hexanediol dimethacrylate (1,6-HDDMA) and triethyleneglycol dimethylacrylate (TRGDMA).

7. The thermosetting composite material according to any one of the preceding claims, wherein the inorganic filler material comprises one or more fillers selected from the group constituted by crystalline fillers and amorphous fillers.

8. The thermosetting composite material according to claim 7, wherein said crystalline fillers are selected from the group constituted by: micronized quartz, glass beads and ceramic microparticles.

9. The thermosetting composite material according to claim 7 or 8, wherein said amorphous fillers are selected from the group constituted by: fused silica, corundum, silicon carbide, aluminum trihydrate (ATH), wallastonite and micronized glass fiber.

10. The thermosetting composite material according to any one of claims 7-9, wherein said fillers are silanized.

11. The thermosetting composite material according to any one of the preceding claims, wherein the total quantity of the filler material is comprised between 50% and 90% by weight with respect to the total weight of the thermosetting composite material.

12. Use of the thermosetting composite material according to any one of the preceding claims for the provision of manufactured articles by molding.

13. The use according to claim 12, wherein said molding occurs by pouring-injection molding.

14. A manufactured article provided by molding, comprising the thermosetting composite material according to any one of claims 1 to 11, wherein said manufactured article is selected from the group constituted by: a bathroom washbasin, a kitchen sink and another sanitary article.

## Patentansprüche

1. Ein wärmehärtbares Verbundmaterial, das eine Polymermatrix und ein anorganisches Füllmaterial umfasst, das in der Matrix verteilt ist, **dadurch gekennzeichnet, dass** die Polymermatrix ein Reaktionsgemisch ist, das Folgendes umfasst: (i) eine Mischung, die aus Isobornylmethacrylat (IBOMA) und Cyclohexylmethacrylat (CHMA) in einem Prozentsatz besteht, der zwischen 5 und 80 Gewichtsprozent, basierend auf dem Gewicht des Gemischs, beträgt; (ii) 2-Hydroxyethylmethacrylat (HEMA) in einem Prozentsatz, der zwischen 5 und 15 Gewichtsprozent, basierend auf dem Gewicht des Gemischs, beträgt; (iii) ein oder mehrere Quervernetzungsmittel in einem Prozentsatz, der zwischen 0,001 und 4 Gewichtsprozent, basierend auf dem Gewicht des Gemischs, beträgt; und (iv) eine Lösung von Polymethylmethacrylat in Methylmethacrylat in einem Prozentsatz, der den Rest zu 100 Gewichtsprozent, basierend auf dem Gewicht des Gemischs, beträgt.

2. Das wärmehärtbare Verbundmaterial gemäß Anspruch 1, worin das Reaktionsgemisch die Mischung aus IBOMA und CHMA in einem Prozentsatz umfasst, der zwischen 10 und 80 Gewichtsprozent, vorzugsweise zwischen 30 und 80 Gewichtsprozent, bezogen auf das Gesamtgewicht des Gemischs, beträgt.

3. Das wärmehärtbare Verbundmaterial gemäß Anspruch 1 oder 2, worin die Mischung aus IBOMA und CHMA eine Mischung aus IBOMA und CHMA zu gleichen Teilen ist.

4. Das wärmehärtbare Verbundmaterial gemäß einem beliebigen der obigen Ansprüche, worin das Reaktionsgemisch HEMA in einem Prozentsatz zwischen 7 und 12 Gewichtsprozent, bezogen auf das Gesamtgewicht des Gemischs, umfasst.

5. Das wärmehärtbare Verbundmaterial gemäß einem beliebigen der obigen Ansprüche, worin das Reaktionsgemisch ein oder mehr Quervernetzungsmittel in einem Prozentsatz zwischen 0,5 und 3 Gewichtsprozent, bezogen auf das Gesamtgewicht des Gemischs, umfasst.

6. Das wärmehärtbare Verbundmaterial gemäß einem beliebigen der obigen Ansprüche, worin die Quervernetzungsmittel gewählt sind aus der Gruppe bestehend aus Ethylenglycoldimethylacrylat (EGDMA), 1,6-Hexandioldimethacrylat (1,6-HDDMA) und Triethylenglycoldimethylacrylat (TRGDMA).

7. Das wärmehärtbare Verbundmaterial gemäß einem beliebigen der obigen Ansprüche, worin das anorganische Füllmaterial einen oder mehrere Füllstoffe umfasst, gewählt aus der Gruppe bestehend aus kristallinen Füllstoffen und amorphen Füllstoffen.

8. Das wärmehärtbare Verbundmaterial gemäß Anspruch 7, worin die kristallinen Füllstoffe gewählt sind aus der Gruppe bestehend aus mikronisiertem Quarz, Glaskügelchen und keramischen Mikropartikeln.

9. Das wärmehärtbare Verbundmaterial gemäß Anspruch 7 oder 8, worin die amorphen Füllstoffe gewählt sind aus der Gruppe bestehend aus Hartglas, Korund, Siliziumcarbid, Aluminiumtrihydrat (ATH), Wollastonit und mikronisierter Glasfaser.

10. Das wärmehärtbare Verbundmaterial gemäß einem beliebigen der Ansprüche 7-9, worin die Füllstoffe silanisiert sind.

11. Das wärmehärtbare Verbundmaterial gemäß einem beliebigen der obigen Ansprüche, worin die Gesamtmenge des Füllmaterials zwischen 50 und 90 Gewichtsprozent, bezogen auf das Gesamtgewicht des wärmehärtbaren Verbundmaterials, beträgt.

12. Verwendung des wärmehärtbaren Verbundmaterials gemäß einem beliebigen der obigen Ansprüche zur Bereitstellung von Produkten durch Formen.

13. Die Verwendung gemäß Anspruch 12, worin das Formen durch Gießen-Spritzgießen stattfindet.

14. Ein Produkt, das durch Formen hergestellt wird und das wärmehärtbare Verbundmaterial gemäß einem beliebigen der Ansprüche 1 bis 11 umfasst, worin das Produkt gewählt ist aus der Gruppe bestehend aus einem Badezimmerwaschbecken, einem Küchenspülbecken und einem anderen Sanitärartikel.

## Revendications

1. Matériau composite thermodurcissable, comportant une matrice polymère et un matériau de charge inorganique réparti à l'intérieur de ladite matrice, **caractérisé en ce que** la matrice polymère est une soupe de réaction qui comporte (i) un mélange constitué de méthacrylate d'isobornyle (IBOMA) et de méthacrylate de cyclo-hexyle (CHMA) dans un pourcentage compris entre 5 % et 80 % en poids sur le poids de la soupe, (ii) du méthacrylate de 2-hydroxyéthyle (HEMA) dans un pourcentage compris entre 5 % et 15 % en poids sur le poids de la soupe, (iii) un ou plusieurs agents de réticulation dans un pourcentage compris entre 0,001 % et 4 % en poids sur le poids de la soupe, et (iv) une solution de poly(méthacrylate de méthyle) dans du méthacrylate de méthyle, dans un pourcentage qui est le complément à 100 % en poids sur le poids de la soupe.

2. Matériau composite thermodurcissable selon la revendication 1, dans lequel la soupe de réaction comporte le mélange constitué d'IBOMA et de CHMA dans un pourcentage compris entre 10 % et 80 % en poids, de préférence entre 30 % et 80 % en poids par rapport au poids total de la soupe.

3. Matériau composite thermodurcissable selon la revendication 1 ou 2, dans lequel ledit mélange constitué d'IBOMA et de CHMA est un mélange d'IBOMA et de CHMA à parts égales.

4. Matériau composite thermodurcissable selon l'une quelconque des revendications précédentes, dans lequel la soupe de réaction comporte de l'HEMA dans un pourcentage compris entre 7 % et 12 % en poids par rapport au poids total de la soupe.

5. Matériau composite thermodurcissable selon l'une quelconque des revendications précédentes, dans lequel la soupe de réaction comporte un ou plusieurs agents de réticulation dans un pourcentage compris entre 0,5 % et 3 % en poids par rapport au poids total de la soupe.

6. Matériau composite thermodurcissable selon l'une quelconque des revendications précédentes, dans lequel lesdits agents de réticulation sont choisis parmi le groupe constitué de diméthylacrylate d'éthylène glycol (EGDMA), de diméthacrylate de 1,6-hexanediol (1,6-HDDMA) et de diméthylacrylate de triéthylène glycol (TRGDMA).

7. Matériau composite thermodurcissable selon l'une quelconque des revendications précédentes, dans lequel le matériau de charge inorganique comporte une ou plusieurs charges choisies parmi le groupe constitué de charges cristallines et de charges amorphes.

8. Matériau composite thermodurcissable selon la revendication 7, dans lequel lesdites charges cristallines sont choisies parmi le groupe constitué de : quartz micronisé, billes de verre et microparticules céramiques.

9. Matériau composite thermodurcissable selon la revendication 7 ou 8, dans lequel lesdites charges amorphes sont choisies parmi le groupe constitué de : silice fondue, corindon, carbure de silicium, trihydrate d'aluminium (ATH), wallastonite et fibre de verre micronisée.

10. Matériau composite thermodurcissable selon l'une quelconque des revendications 7 à 9, dans lequel lesdites charges sont silanisées.

11. Matériau composite thermodurcissable selon l'une quelconque des revendications précédentes, dans lequel la quantité totale du matériau de charge est comprise entre 50 % et 90 % en poids par rapport au poids total du matériau composite thermodurcissable.

12. Utilisation du matériau composite thermodurcissable selon l'une quelconque des revendications précédentes pour la fourniture d'articles manufacturés par moulage.

13. Utilisation selon la revendication 12, dans laquelle ledit moulage a lieu sous la forme d'un moulage par coulée-injection.

14. Article manufacturé obtenu par moulage, comportant le matériau composite thermodurcissable selon l'une quelconque des revendications 1 à 11, dans lequel ledit article manufacturé est choisi parmi le groupe constitué de : un lavabo de salle de bain, un évier de cuisine et un autre article sanitaire.
